# EUROPEAN PATENT SPECIFICATION

(11) **EP 4 047 435 B1**
(45) Date of publication and mention of the grant of the patent: **14.05.2025**
(21) Application number: 21158630.0
(22) Date of filing: 23.02.2021
(51) Int. Cl.: G05D 1/00, G05B 23/02

(54) **SYSTEM AND METHOD FOR ANOMALY MANAGEMENT IN FACILITY**
SYSTEM UND VERFAHREN ZUR ANOMALIEVERWALTUNG IN EINER ANLAGE
SYSTÈME ET PROCÉDÉ DE GESTION D'ANOMALIES DANS UNE INSTALLATION

(43) Date of publication of application: 24.08.2022
(73) Proprietor: Siemens Aktiengesellschaft, 80333 München (DE)
(72) Inventor: RAVEENDRAN, Varsha, 560062 Bangalore, Karnataka (IN); SENGUPTA, Arjun, 400052 Mumbai, Maharashtra (IN); SOORAJ PS, Arun, 560099 Electronic City, Karnataka (IN); SUDHAKARAN, Vinay, 560076 Bangalore, Karnataka (IN)
(74) Representative: Horn Kleimann Waitzhofer Schmid-Dreyer Patent- und Rechtsanwälte PartG mbB

(56) References cited:
- EP-A2- 2 637 073
- US-A1- 2020 241 552
- US-A1- 2020 285 249
- ARDA SENOCAK ET AL: "Learning to Localize Sound Sources in Visual Scenes: Analysis and Applications", ARXIV.ORG, CORNELL UNIVERSITY LIBRARY, 201 OLIN LIBRARY CORNELL UNIVERSITY ITHACA, NY 14853, 20 November 2019 (2019-11-20), XP081537183

## Description

The present disclosure generally relates to anomaly management, and more particularly to a system, an autonomous vehicle and a method for anomaly detection and localization, and for communicating information about the anomaly in a privacy preserving manner.

Anomalies in facilities, such as a factory, could be cause of disruption. The anomaly could be something small, such as a machine breakdown which could affect production efficiency, or large such as an accident like fire which could result in loss of life and incur significant costs. Industrial fires and explosions costs businesses' billions of dollars every year. Reducing the extent of damage by industrial fires and explosions is of prime importance to businesses. There are some existing solutions to predict, detect and report incidents in real-time, autonomously in a factory or the like, using, for example, data received from CCTV cameras. Such solutions are applicable in factories where CCTV cameras are available. In factories where privacy is of concern, CCTV cameras are not allowed and manual checks by factory personnel are conducted to ensure safety of machines and workers during any incident. Further, it may be appreciated that in large facilities, Search and Rescue (SAR) during human-caused or natural disasters is complex due to many reasons, such as large affected area, life-threatening conditions like smoke, fire and lack of enough information available to the SAR team at the operational level.

EP 2 637 073 A2 discloses a robot cleaner and a method for controlling the same. Firstly, a sound source direction and a sound source position may be detected by one or more microphones, e,g., three microphones, and a specific event sound may be recognized. Secondly, a sound recognition function may be updated using an ambient sound, for sound recognition from background noise and environmental noise. Thirdly, the robot cleaner may be moved to a detected direction or position of a sound source with respect to an event sound. Then, image information may be detected, or whether an abnormal situation has occurred or not may be determined. Such information may be provided via a communication network.

US 2020/0241552 A1 discloses an ambient sound environment captured by a microphone array of an autonomous vehicle traveling in the ambient sound environment. A perception module of the autonomous vehicle classifies sounds and localizes sound sources in the ambient sound environment. Classification is performed using spectrum analysis and/or machine learning. In an embodiment, sound sources within a field of view (FOV) of an image sensor of the autonomous vehicle are localized in a visual scene generated by the perception module. In an embodiment, one or more sound sources outside the FOV of the image sensors are localized in a static digital map. Localization is performed using parametric or non-parametric techniques and/or machine learning. The output of the perception module is input into a planning module of the autonomous vehicle to plan a route or trajectory for the autonomous vehicle in the ambient sound environment.

US 2020/0285249 A1 discloses a response system and method. The system includes a plurality of microphones strategically located at various locations of the protected area, a plurality of acoustic beacons to provide navigational support one or more autonomous non-flying (ANF) drones, and a central controller. Each of the one or more ANF drones can be equipped with an acoustic positioning system that uses beacon signals (e.g., mechanical waves) transmitted by the plurality of acoustic beacons to determine its position relative to the plurality of acoustic beacons. Once an acoustic event is detected, it can be analyzed to determine whether there is a threat. If the threat is confirmed, the central controller can dispatch one or more of the ANF drones to investigate and/or to engage the target.

In light of the above, it is an object of the present disclosure to provide a system and method for anomaly detection and localization, and for communicating information about the anomaly in a privacy preserving manner.

The present invention is defined by the enclosed claims.

The object of the present disclosure is also achieved by a method for anomaly management in a facility. The method comprises monitoring the facility to detect one or more anomalies therein. The method further comprises determining location information of a site of the detected one or more anomalies in the facility.

The method comprises navigating an autonomous vehicle to the site of the detected one or more anomalies in the facility in response to detection of the one or more anomalies therein, based on the determined location information of the site of the detected one or more anomalies in the facility. The method comprises capturing, by the autonomous vehicle, information about the detected one or more anomalies in the facility at the site of the facility. The method comprises communicating the captured information about the detected one or more anomalies along with the determined location information of the site of the detected one or more anomalies in the facility.

The method further comprises capturing sound signals in the facility; filtering one or more ambient sound signals from the captured sound signals, using a dataset of the plurality of characteristic ambient sound signals, to provide filtered sound signals, wherein the dataset of the plurality of characteristic ambient sound signals includes multiple sound patterns which represent possible ambient sound patterns in the facility; identifying, by the trained function, one or more anomalous sound signals from the filtered sound signals; and detecting the one or more anomalies in the facility based on the identified one or more anomalous sound signals.

In one or more embodiments, the dataset of the plurality of characteristic ambient sound signals have each of the plurality of characteristic ambient sound signals associated with one or more sites in the facility, and the method further comprises determining the location information of the site of the detected one or more anomalies in the facility based on the filtered one or more ambient sound signals and the associated one or more sites therewith.

In one or more embodiments, the method further comprises determining the location information of the site of the detected one or more anomalies in the facility by implementing one or more of time delay estimation technique, beamforming technique and deep-neural networks for processing of the captured sound signals.

In one or more embodiments, the method further comprises training the trained function on a plurality of characteristic anomalous sound signals associated with the facility; and identifying, by the trained function, the one or more anomalous sound signals based on recognition of one or more captured sound signals substantially matching at least one of the plurality of characteristic anomalous sound signals.

In one or more embodiments, the method further comprises training the trained function on a plurality of characteristic ambient sound signals associated with the facility; and identifying, by the trained function, the one or more anomalous sound signals based on recognition of one or more captured sound signals substantially differing from each of the plurality of characteristic ambient sound signals.

In one or more embodiments, the method further comprises determining a current location of the autonomous vehicle in the facility using a real-time locating system (RTLS) platform associated with the facility.

In one or more embodiments, the method further comprises navigating the autonomous vehicle to the site of the detected one or more anomalies in the facility based on the determined current location of the autonomous vehicle in the facility and the determined location information of the site of the detected one or more anomalies in the facility, by implementing Visual Simultaneous Localization and Mapping (VSLAM) technique.

In one or more embodiments, the method further comprises recognizing one or more individuals calling for assistance based on one or more of sound analysis, pose estimation and gesture recognition, at the site of the detected one or more anomalies in the facility.

In one or more embodiments, the method further comprises processing the captured information about the detected one or more anomalies to generate map information representing the detected one or more anomalies along with at least a partial map of the facility indicating access to the site of the detected one or more anomalies therein; and relaying the generated map information.

In one or more embodiments, the method further comprises relaying the generated map information via one or more of: web portal, FTP server, web service, email.

In one or more embodiments, the method further comprises implementing the autonomous vehicle to monitor the facility.

The object of the present disclosure is also achieved by a system for anomaly management in a facility. The system comprises a detection module. The detection module is configured to monitor the facility to detect one or more anomalies therein. The detection module is further configured to determine location information of a site of the detected one or more anomalies in the facility. The system further comprises a navigation module configured to navigate an autonomous vehicle to the site of the detected one or more anomalies in the facility in response to detection of the one or more anomalies therein, based on the determined location information of the site of the detected one or more anomalies in the facility. The autonomous vehicle comprises a perception module configured to capture information about the detected one or more anomalies in the facility at the site of the facility, the perception module including a sound-sensing unit configured to capture sound signals in the facility. The autonomous vehicle further comprises a communication module configured to communicate the captured information about the detected one or more anomalies along with the determined location information of the site of the detected one or more anomalies in the facility. The detection module includes a dataset of a plurality of characteristic ambient sound signals, wherein the dataset of the plurality of characteristic ambient sound signals includes multiple sound patterns which represent possible ambient sound patterns in the facility; a filter unit configured to filter one or more ambient sound signals from the captured sound signals, using the dataset of a plurality of characteristic ambient sound signals, to provide filtered sound signals; the detection module further includes a classification unit implemented as a trained function and configured to identify one or more anomalous sound signals from the filtered sound signals, wherein detection of the one or more anomalies in the facility is based on the identified one or more anomalous sound signals.

In one or more embodiments, the perception module comprises a sound-sensing unit having a microphone configured to capture sound signals in the facility. Further, the detection module comprises a dataset of a plurality of characteristic ambient sound signals, with each of the plurality of characteristic ambient sound signals associated with one or more sites in the facility; a filter unit configured to filter one or more ambient sound signals from the captured sound signals, using the dataset of the plurality of characteristic ambient sound signals, to provide filtered sound signals; a classification unit implementing a trained function configured to identify one or more anomalous sound signals from the filtered sound signals; and a localization unit configured to detect the one or more anomalies in the facility based on the identified one or more anomalous sound signals.

In one or more embodiments, the localization unit is configured to determine the location information of the site of the detected one or more anomalies in the facility based on the filtered one or more ambient sound signals and the associated one or more sites therewith.

In one or more embodiments, the localization unit is configured to determine the location information of the site of the detected one or more anomalies in the facility by implementing one or more of time delay estimation technique, beamforming technique and deep-neural networks for processing of the captured sound signals.

In one or more embodiments, the trained function is trained on a plurality of characteristic anomalous sound signals associated with the facility, and wherein the trained function identifies the one or more anomalous sound signals based on recognition of one or more captured sound signals substantially matching at least one of the plurality of characteristic anomalous sound signals.

In one or more embodiments, the trained function is trained on a plurality of characteristic ambient sound signals associated with the facility, and wherein the trained function identifies the one or more anomalous sound signals based on recognition of one or more captured sound signals substantially differing from each of the plurality of characteristic ambient sound signals.

In one or more embodiments, the detection module is integrated in the autonomous vehicle.

In one or more embodiments, the navigation module is integrated in the autonomous vehicle.

In one or more embodiments, the navigation module is configured to determine a current location of the autonomous vehicle in the facility using a real-time locating system (RTLS) platform associated with the facility.

In one or more embodiments, the navigation module is configured to navigate the autonomous vehicle to the site of the detected one or more anomalies in the facility based on the determined current location of the autonomous vehicle in the facility and the determined location information of the site of the detected one or more anomalies in the facility, by implementing Visual Simultaneous Localization and Mapping (VSLAM) technique.

In one or more embodiments, the system further comprises a vision-processing module configured to recognize one or more individuals calling for assistance based on one or more of sound analysis, pose estimation and gesture recognition, at the site of the detected one or more anomalies in the facility.

In one or more embodiments, the system further comprises a map-building module configured to process the captured information about the detected one or more anomalies to generate map information representing the detected one or more anomalies along with at least a partial map of the facility indicating access to the site of the detected one or more anomalies therein, wherein the communication module is configured to configured to relay the generated map information.

In one or more embodiments, the communication module is configured to relay the generated map information via one or more of: web portal, FTP server, web service, email.

The object of the present disclosure is also achieved by an autonomous vehicle adapted to be stationed in a facility for anomaly management therein. The autonomous vehicle comprises a detection module. The detection module is configured to monitor the facility to detect one or more anomalies therein. The detection module is further configured to determine location information of a site of the detected one or more anomalies in the facility. The autonomous vehicle also comprises a navigation module configured to navigate the autonomous vehicle to the site of the detected one or more anomalies in the facility in response to detection of the one or more anomalies therein, based on the determined location information of the site of the detected one or more anomalies in the facility. The autonomous vehicle further comprises a perception module configured to capture information about the detected one or more anomalies in the facility at the site of the facility, the perception module including a sound-sensing unit configured to capture sound signals in the facility. The autonomous vehicle also comprises a communication module configured to communicate the captured information about the detected one or more anomalies along with the determined location information of the site of the detected one or more anomalies in the facility. The detection module includes a dataset of a plurality of characteristic ambient sound signals, wherein the dataset of the plurality of characteristic ambient sound signals includes multiple sound patterns which represent possible ambient sound patterns in the facility; a filter unit configured to filter one or more ambient sound signals from the captured sound signals, using the dataset of a plurality of characteristic ambient sound signals, to provide filtered sound signals; the detection module further includes a classification unit implemented as a trained function and configured to identify one or more anomalous sound signals from the filtered sound signals, wherein detection of the one or more anomalies in the facility is based on the identified one or more anomalous sound signals.

In one or more embodiments, the autonomous vehicle further comprises a map-building module configured to process the captured information about the detected one or more anomalies to generate map information representing the detected one or more anomalies along with at least a partial map of the facility indicating access to the site of the detected one or more anomalies therein. The communication module is configured to relay the generated map information.

The object of the present disclosure is further achieved by a computer-program product, having computer-readable instructions stored therein, that when executed by a processing unit, cause the processing unit to perform the method steps described above.

The object of the present disclosure is further achieved by a computer readable medium on which program code sections of a computer program are saved, the program code sections being loadable into and/or executable in a system to make the system execute the method steps described above when the program code sections are executed in the system.

A more complete appreciation of the present disclosure and many of the attendant aspects thereof will be readily obtained as the same becomes better understood by reference to the following description when considered in connection with the accompanying drawings:
- FIG 1: is a schematic block diagram representation of a system for anomaly management in a facility, in accordance with an embodiment of the present disclosure;
- FIG 2: is a schematic block diagram representation of a computing device for anomaly management in a facility, in accordance with an embodiment of the present disclosure;
- FIG 3: is a flowchart representation of operation of a trained function for processing of sound signals, in accordance with an embodiment of the present disclosure;
- FIG 4: is a schematic block diagram representation of an autonomous vehicle for anomaly management in a facility, in accordance with an embodiment of the present disclosure; and
- FIG 5: is a flowchart illustrating a method for anomaly management in a facility, in accordance with an embodiment of the present disclosure.

Examples of a system, an autonomous vehicle, a method, a computer-program product and a computer readable medium for anomaly management in a facility are disclosed herein. Various embodiments are described with reference to the drawings, wherein like reference numerals are used to refer to like elements throughout. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

The term "facility," as used herein, may refer to any building such as a factory or any type of manufacturing facility, an office building or the like, which may house various equipment and may be prone to some form of anomaly. Herein, the term "factory" refers to the whole of machineries or parts thereof which cooperate to allow a production process of any kind to be carried out. Although the present disclosure has been described generally in terms of the facility being some form of a building, the term "facility" as used in the preferred embodiments and claims according to the present disclosure should be understood broadly to include not only buildings, but also outdoor facilities such as a parking lot, a traffic junction, and vehicles such as airplanes, ships and trucks.

Further, in the context of the present disclosure, the term "anomaly" (or any form thereof), used herein is to be commonly understood as any of irregularity, abnormality, difference, divergence and deviation from the usual. As noted above, the anomaly could be something small, such as a machine breakdown in the facility which could affect production efficiency thereof, or large such as an accident like fire or explosion in the facility which could result in loss of life and incur significant costs.

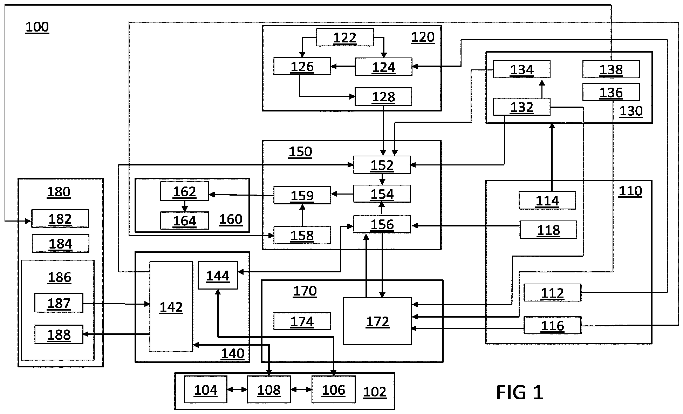

FIG 1 is a schematic block diagram representation of a system 100 for anomaly management in a facility, in accordance with one or more embodiments of the present disclosure. In present implementation, the system 100 may reside on and may be executed by a computer, which may be connected to a network (e.g., the internet or a local area network). Examples of computer may include, but are not limited to, a personal computer(s), a laptop computer(s), mobile computing device(s), a server computer, a series of server computers, a mainframe computer(s), or a computing cloud(s). In some implementations, each of the aforementioned may be generally described as a computing device. In certain implementations, a computing device may be a physical or virtual device. In many implementations, a computing device may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In some implementations, the instruction sets and subroutines of the system 100, which may be stored on storage device, such as storage device coupled to computer may be executed by one or more processors and one or more memory architectures included within computer. In some implementations, storage device may include but is not limited to: a hard disk drive; a flash drive, a tape drive; an optical drive; a RAID array (or other array); a random-access memory (RAM); and a read-only memory (ROM).

In some implementations, network may be connected to one or more secondary networks (e.g., network), examples of which may include but are not limited to: a local area network; a wide area network; or an intranet, for example.

In some implementations, computer may include a data store, such as a database (e.g., relational database, object-oriented database, triplestore database, etc.) and may be located within any suitable memory location, such as storage device coupled to computer. In some implementations, data, metadata, information, etc. described throughout the present disclosure may be stored in the data store. In some implementations, computer may utilize any known database management system such as, but not limited to, DB2, in order to provide multi-user access to one or more databases, such as the above noted relational database. In some implementations, the data store may also be a custom database, such as, for example, a flat file database or an XML database. In some implementations, any other form(s) of a data storage structure and/or organization may also be used. In some implementations, the system 100 may be a component of the data store, a standalone application that interfaces with the above noted data store and/or an applet / application that is accessed via client applications. In some implementations, the above noted data store may be, in whole or in part, distributed in a cloud computing topology. In this way, computer and storage device may refer to multiple devices, which may also be distributed throughout the network.

In some implementations, computer may execute application for anomaly management in a facility, as described above. In some implementations, the system 100 and/or application may be accessed via one or more of client applications. In some implementations, the system 100 may be a standalone application, or may be an applet / application / script / extension that may interact with and/or be executed within application a component of application and/or one or more of client applications. In some implementations, application may be a standalone application, or may be an applet / application / script / extension that may interact with and/or be executed within the system 100, a component of the system 100, and/or one or more of client applications. In some implementations, one or more of client applications may be a standalone application, or may be an applet / application / script / extension that may interact with and/or be executed within and/or be a component of the system 100 and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to user devices may be executed by one or more processors and one or more memory architectures incorporated into user devices.

In some implementations, one or more of storage devices may include but are not limited to: hard disk drives; flash drives, tape drives; optical drives; RAID arrays; random access memories (RAM); and read-only memories (ROM). Examples of user devices (and/or computer) may include, but are not limited to, a personal computer, a laptop computer, a smart/data-enabled, cellular phone, a notebook computer, a tablet, a server, a television, a smart television, a media capturing device, and a dedicated network device.

In some implementations, one or more of client applications may be configured to effectuate some or all of the functionality of the system 100 (and vice versa). Accordingly, in some implementations, the system 100 may be a purely server-side application, a purely client-side application, or a hybrid server-side / client-side application that is cooperatively executed by one or more of client applications and/or the system 100.

In some implementations, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system 100, and application taken singly or in any combination, may effectuate some or all of the same functionality, any description of effectuating such functionality via one or more of client applications the system 100, application or combination thereof, and any described interaction(s) between one or more of client applications the system 100, application or combination thereof to effectuate such functionality, should be taken as an example only and not to limit the scope of the disclosure.

In some implementations, one or more of users may access computer and the system 100 (e.g., using one or more of user devices) directly through network or through secondary network. Further, computer may be connected to network through secondary network with phantom link line. The system 100 may include one or more user interfaces, such as browsers and textual or graphical user interfaces, through which users may access the system 100.

In some implementations, the various user devices may be directly or indirectly coupled to communication network, such as communication network and communication network hereinafter simply referred to as network and network respectively. For example, user device may be directly coupled to network via a hardwired network connection. Alternatively, user device may be wirelessly coupled to network via wireless communication channel established between user device and wireless access point (i.e., WAP) which in turn may be directly coupled to network. WAP may be, for example, an IEEE 802.11a, 802.11b, 802.11g, 802.11ac, 802.11ae, Wi-Fi^{®}, RFID, and/or Bluetooth^{™} (including Bluetooth^{™} Low Energy) device that is capable of establishing wireless communication channel between user device and WAP. In other examples, user device may be wirelessly coupled to network via wireless communication channel established between user device and cellular network / bridge which may be directly coupled to network. User devices may execute an operating system, examples of which may include but are not limited to, Android^{®}, Apple^{®} iOS^{®}, Mac^{®} OS X^{®}; Red Hat^{®} Linux^{®}, or a custom operating system.

In some implementations, some or all of the IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example, Bluetooth^{™} (including Bluetooth^{™} Low Energy) is a telecommunications industry specification that allows, e.g., mobile phones, computers, smart phones, and other electronic devices to be interconnected using a short-range wireless connection. Other forms of interconnection (e.g., Near Field Communication (NFC)) may also be used.

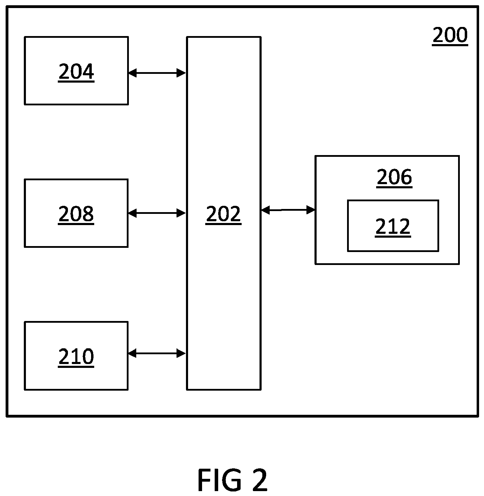

FIG 2 illustrates a schematic diagram of a computing device 200 for anomaly management in the facility, in accordance with an embodiment of the present disclosure. In an example, the computing device 200 may be a computer-program product 200 programmed for performing the said purpose. In another example, the computing device 200 may be a computer readable medium on which program code sections of a computer program are saved, the program code sections being loadable into and/or executable in a system to make the system execute the steps for performing the said purpose. The computing device 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device can be implemented in a single chip. The system 100 of the present disclosure as discussed in the preceding paragraphs may include or be embodied in the computing device 200. It may be appreciated that the two systems 100 and 200 (and the corresponding components/elements) may be equivalent for the purposes of the present disclosure.

In one embodiment, the computing device 200 includes a communication mechanism such as a bus 202 for passing information among the components of the computing device 200. The computing device 200 includes one or more processing units 204 and a memory unit 206. Generally, the memory unit 206 is communicatively coupled to the one or more processing units 204. Hereinafter, the one or more processing units 204 are simply referred to as processor 204 and the memory unit 206 is simply referred to as memory 206. Herein, in particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP) 208, or one or more application-specific integrated circuits (ASIC) 210. A DSP 208 typically is configured to process real-world signals (e.g., sound) in real time independently of the processor 204. Similarly, an ASIC 210 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

As used herein, the term "processor" refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

The processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for anomaly management in a facility. In particular, the memory 206 includes a module arrangement 212 to perform steps for anomaly management in a facility. The memory 206 also stores the data associated with or generated by the execution of the inventive steps.

Herein, the memory 206 may be volatile memory and/or non-volatile memory. The memory 206 may be coupled for communication with the processing unit 204. The processing unit 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

It is to be understood that the system and methods described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology can be centralized or distributed (or a combination thereof) as known to those skilled in the art.

The various modules of the system 100 as described hereinafter may be comprised (stored) in the memory 206 (as described in the preceding paragraphs) to enable the system 100 for anomaly management in a facility.

Referring back to FIG 1, as illustrated, the system 100 includes multiple modules, with each module comprising one or more units being responsible for performing at least one of the discrete operations of the system 100, and the various modules communicating with each other to achieve the functionality of the anomaly management in the facility. It may be appreciated that although the system 100 of the present disclosure is implemented for anomaly management in the facility, at least some of the components (including module(s) and unit(s) therein) may be located outside and/or remote to the facility without any limitations. According to various embodiments of the present disclosure, the system 100 includes an autonomous vehicle (such as, an autonomous vehicle 400) stationed in the facility. Herein, some of the modules of the system 100 may be integrated in the said autonomous vehicle without departing from the spirit and the scope of the present disclosure. In the illustration of FIG 1, the various lines/arrows connecting the modules of the system 100 although have been shown intersecting each other, it would be appreciated that those lines/arrows shall be considered non-intersecting for the purposes of the present disclosure.

The definition of the term "module" as referred to herein is to be understood as constituting hardware circuitry such as a CCD, CMOS, SoC, AISC, FPGA, a processor or microprocessor (a controller) configured for a certain desired functionality, or a communication module containing hardware such as transmitter, receiver or transceiver, or a non-transitory medium comprising machine executable code that is loaded into and executed by hardware for operation, and do not constitute software per se. In addition, the controllers shown herein are hardware that are comprised of components, for example, a processor or microprocessor configured for operation by the algorithms shown in the flowcharts and described herein.

Further, the term "unit" used herein may represent, for example, a unit including one or more combinations of hardware, software and firmware. The term "unit" may be interchangeably used with the terms such as, for example, "component" and "circuit". The "unit" may be a minimum unit of an integrated component or may be a part thereof. The "unit" may be a minimum unit for performing one or more functions or a part thereof. The "unit" may be implemented mechanically and/or electronically.

Referring to FIG 1 in detail, as shown, the system 100 includes a real-time locating system (RTLS) platform 102 associated with the facility. RTLS is one of a number of technologies that detects the current geolocation of a target, which may be anything from a vehicle to an item in a manufacturing plant to a person. Herein, the RTLS platform 102, such as SIMATIC RTLS^{®}, the real-time locating system from Siemens^{®}, delivers location data of equipment, machine and people wirelessly, accurate to within centimeters. The RTLS platform 102 is made up of hardware components, including anchors, gateways and transponders, and the locating manager software. Herein, the RTLS platform 102 includes an RTLS server 104, an RTLS anchor 106 and an RTLS gateway 108. Depending on the application and operational area, the transponders (not shown) are attached to workpieces, robots, vehicles, etc. The RTLS anchor 106 captures the signals of the transponders, gives them a position stamp and forwards the bundled data to the RTLS gateway 108. The RTLS gateway 108 bundles all data collected and transmits it to the locating manager, i.e. the RTLS server 104. The RTLS server 104 calculates the real-time location information from the transmitted distances and passes the information to a higher-level system. The implementation of the RTLS platform 102 for the purposes of the present disclosure has been described later in the description.

The system 100 further includes a perception module 110. The perception module 110 hosts the various input sensory units in the system 100 (i.e. supports various input sensors), and is responsible for sensing and perceiving various factors which are required for planning and performing the manipulation tasks in real environments. In the present implementations, the perception module 110 may be an integrated/unitary component, or a distributed system without departing from the scope and the spirit of the present disclosure in any manner.

According to embodiments of the perception module 110, the perception module 110 includes a sound-sensing unit 112. Herein, the sound-sensing unit 112 includes a microphone configured to capture sound signals in the facility. The term "microphone" is understood to represent anything from one microphone to a group or an array of microphones arranged in a suitable configuration and outputting a single channel signal. It may be contemplated that the microphone may be any type of electrical signal producing device sensitive to vibration, such as acoustic transducers, sensors, electronic triggers, piezoelectric crystals, and the like. In one embodiment, the sound-sensing unit 112 may be located in the facility; for example, the microphones, of the sound-sensing unit 112, may be disposed throughout the facility, mounted at various locations therein. In another embodiment, the sound-sensing unit 112 may be integrated in the said autonomous vehicle; for example, the microphones, of the sound-sensing unit 112, may be mounted on a body of the said autonomous vehicle and pointing to various directions therefrom to cover different areas of the facility.

Further, the perception module 110 includes a vision-sensing unit 114. Herein, the vision-sensing unit 114 includes a camera configured to capture video of the facility. The term "camera" is understood to represent anything from one camera to a group of cameras arranged in a suitable configuration and outputting one or more video feeds of corresponding covered areas of the facility. In one embodiment, the vision-sensing unit 114 may be located in the facility; for example, the cameras, of the vision-sensing unit 114, may be disposed throughout the facility, mounted at various locations therein. In another embodiment, the vision-sensing unit 114 may be integrated in the said autonomous vehicle; for example, the cameras, of the vision-sensing unit 114, may be mounted on a body of the said autonomous vehicle and pointing to various directions therefrom to cover different areas of the facility.

In one or more embodiments, the perception module 110 may include a depth-sensing unit 116. Herein, the depth-sensing unit 116 includes sensors to determine distance of an object or an obstacle in a Field-of-View (FOV) thereof, in the facility. In one example, the depth-sensing unit 116 may include optical sensors such as LIDAR, SONAR, RADAR or the like, as known and implemented in the art for depth perception. In another example, the depth-sensing unit 116 may include depth sensors in the form of three-dimensional (3D) range finder, which acquire multi-point distance information across a wide FOV. In an example implementation, the depth-sensing unit 116 may use Intel Realsense D435 camera that combines capabilities of vision and depth sensing. In other examples, laser scan data may also be used from generating the depth map. In the present embodiments, the depth-sensing unit 116 may be integrated in the said autonomous vehicle; for example, the sensors, of the depth-sensing unit 116, may be mounted on a body of the said autonomous vehicle. The working of such sensors, of the depth-sensing unit 116, for supporting movement of the said autonomous vehicle in an area (such as, the facility) is known in the art and thus has not been explained herein for the brevity of the present disclosure.

Further, in one or more embodiments, the perception module 110 may include an odometry-sensing unit 118. Herein, the odometry-sensing unit 118 is integrated in the said autonomous vehicle for example, the sensors, of the odometry-sensing unit 118, may be mounted on a body of the said autonomous vehicle. The odometry-sensing unit 118 includes sensors, including one or more position sensors to determine a current position (e.g. position coordinates) of the said autonomous vehicle in the facility and one or more orientation sensors to determine a current orientation (e.g. an angle) of the said autonomous vehicle with respect to the facility (or specifically, an object in the facility). The working of such sensors, of the odometry-sensing unit 118, for supporting movement of the said autonomous vehicle in an area (such as, the facility) is known in the art and thus has not been explained herein for the brevity of the present disclosure.

Further, as illustrated, the system 100 includes a detection module 120. The detection module 120 is configured to monitor the facility to detect one or more anomalies therein. The detection module 120 is further configured to determine location information of a site of the detected one or more anomalies in the facility. As used herein the term "site" includes both a specific location within a building or area, such as a single room or defined area, and a more general area of interest, as the context will make evident, in the facility.

In the present embodiments, the detection module 120 is responsible for sound processing of the captured sound signals in the facility, as captured by and received from the sound-sensing unit 112 of the perception module 110, to infer any anomalies in the facility therefrom. For example, as discussed, the facility may be a factory with multiple equipment therein, and the anomaly may be an explosion and a fire hazard in one of the equipment; in such case, the sound of explosion as may be captured in the sound signals received from the sound-sensing unit 112 of the perception module 110 may be analyzed to determine patterns for inferring that there is an anomaly in the facility and the inferred anomaly may be an explosion. In a similar example, the anomaly may be a breakdown of one of the equipment which may thus be producing some acoustic pattern indicating equipment failure, like a whirring sound; in such case, such sound as may be captured in the sound signals received from the sound-sensing unit 112 of the perception module 110 may be used to infer that there is an anomaly in the facility and the inferred anomaly may be equipment failure. The details of operations of the detection module 120 is discussed in detail in the proceeding paragraphs.

In one or more embodiments, the detection module 120 may include a dataset 122 of a plurality of characteristic ambient sound signals. The term "characteristic ambient sound signals" in this context shall be construed as sounds generally present in the facility. It may be appreciated that different sites in the facility may provide different "characteristic ambient sound signals." For example, a first site with a cutting machine may have characteristic ambient sound signals with cutting noise, and another site with human operators may have characteristic ambient sound signals with human chatter, or the like. Such dataset 122 of plurality of characteristic ambient sound signals may be unique to the facility and may be generated locally at the site based on sound recordings over a period of time during normal operations therein, or it may even be possible to generate a large dataset which could be applied generally to different facilities without any limitations. Further, in the present embodiments, each of the plurality of characteristic ambient sound signals, in the dataset 122, is associated with one or more sites in the facility. As discussed, different sites in the facility may provide different "characteristic ambient sound signals;" herein, each characteristic ambient sound signal may be associated, in the form of tag, metadata or the like, with the corresponding source, i.e. site in the facility. This allows to locate a source (site) of a sound signal in the facility by directly checking the tag of the sound signal.

The detection module 120 may further include a filter unit 124 configured to filter one or more ambient sound signals from the captured sound signals to provide filtered sound signals. The filter unit 124 may achieve this by using the dataset 122 of the plurality of characteristic ambient sound signals. As may be contemplated, since the characteristic ambient sound signals may be known, the filter unit 124 could isolate and filter-out (subtract) the characteristic ambient sound signals, as may be captured in the sound signals received from the sound-sensing unit 112 of the perception module 110. The filter unit 124 may employ any of optimal linear filtering algorithms, for example Wiener filtering, Kalman filtering, spectral subtraction technique, and the like without any limitations. Techniques for achieving sound filtering may be contemplated by a person skilled in the art and thus not have been described herein for the brevity of the present disclosure.

According to embodiments of the present disclosure, the detection module 120 further includes a classification unit 126. The classification unit 126 is configured to identify one or more anomalous sound signals from the filtered sound signals. In the present embodiments, the classification unit 126 implements a trained function to achieve the functionality. That is, in the present implementation, the trained function is responsible for identifying one or more anomalous sound signals from the filtered sound signals. In one or more embodiments of the present disclosure, the trained function is a machine learning model, and the two terms have been interchangeably used for the purposes of the present disclosure without any limitations.

In general, machine learning is a subset of artificial intelligence. Herein, the machine learning model is trained to perform tasks based on some predefined data sets without having to be programmed to do so. The predefined data sets are set of input and output according to which the machine learning model is trained. Typically, a machine learning model employs an artificial neural network (ANN). The artificial neural network (ANN) may have a single layer or multiple hidden layers between the input and output layers, with the output each layer serving as input to the successive layer. As discussed, for proper functioning, the machine learning model needs to be trained. The training is done by employing learning algorithms. The learning algorithms may be a supervised learning algorithm or an unsupervised learning algorithm or a reinforcement learning algorithm. The supervised learning algorithm is like a teacher-student learning. Herein, data sets consisting of a set of input data along with their respective output data are provided. The machine learning model considers them as examples and learns a rule that maps each input data to the respective output data. Contrary to the supervised learning, in unsupervised learning, outputs for the input data is not provided and the machine learns without supervision. In reinforcement learning, no data sets are provided and the machine learns with "experience".

In one embodiment, the trained function is trained on a plurality of characteristic anomalous sound signals associated with the facility. For this purpose, the trained function may implement a dataset (not shown) of characteristic anomalous sound signals. Herein, the dataset of characteristic anomalous sound signals may include multiple sound patterns which generally represent various possible anomalies in the facility; such as, for a factory, the characteristic anomalous sound signals may include sound(s) of explosion, sound(s) of machine breakdown, sound(s) of human call for help, and the like. Further, the trained function identifies the one or more anomalous sound signals based on recognition of one or more captured sound signals substantially matching at least one of the plurality of characteristic anomalous sound signals. That is, if the trained function recognizes any of the isolated sound patterns, as may be captured in the sound signals received from the sound-sensing unit 112 of the perception module 110, to be matching any one of the plurality of characteristic anomalous sound signals, as in the dataset of characteristic anomalous sound signals, it may be inferred that there is an anomaly in the facility. The type of anomaly may be identified based on the characteristic anomalous sound signal which is matched therewith, as the matched characteristic anomalous sound signal may be pre-tagged to the corresponding anomaly.

In another embodiment, the trained function is trained on a plurality of characteristic ambient sound signals associated with the facility. For this purpose, the trained function may implement a dataset (such as, the dataset 122) of characteristic ambient sound signals. As discussed, the dataset 122 of characteristic ambient sound signals include multiple sound patterns which generally represent various possible ambient sound patterns in the facility; such as, for a factory, the characteristic ambient sound signals may include sound(s) of machine operation, sound(s) of human chatter, and the like. Further, the trained function identifies the one or more anomalous sound signals based on recognition of one or more captured sound signals substantially differing from each of the plurality of characteristic ambient sound signals. That is, if the trained function recognizes any of the isolated sound patterns, as may be captured in the sound signals received from the sound-sensing unit 112 of the perception module 110, to be substantially differing from each of the plurality of characteristic ambient sound signals, as in the dataset 122 of characteristic ambient sound signals, it may be inferred that such isolated sound signal may represent an anomaly in the facility. The type of anomaly may be identified based on further matching of the said isolated sound signal with the characteristic anomalous sound signals, as discussed above.

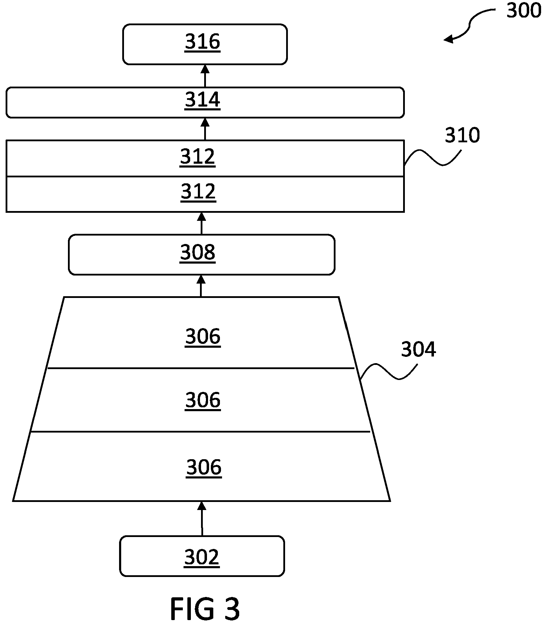

FIG 3 is a flowchart representation of operation of a trained function 300 for processing of sound signals, in accordance with an embodiment of the present disclosure. Herein, the trained function 300 receives an input 302. The input 302 is received in a block 304 including multiple convolutional neural networks (CNNs) 306. Herein, the CNNs 306 are two-dimensional (2D) CNNs, which implement 3x3 filters and rectified linear activation functions (or ReLUs, for short) for processing of sound signals. The ReLUs are piecewise linear functions that will output the input directly if it is positive, otherwise, it will output zero, and thus enhances dropouts in CNNs 306. The output from block 304 is passed to a feature matrix 308. Herein, the feature matrix 308 (on CNNs 306) is the output of one filter applied to the previous layer. A filter that is given is drawn across the entire previous layer, moved one pixel at a time. Each position results in activation of the neuron and the output are collected in the feature matrix 308. The output from the feature matrix 308 is passed to a block 310 having Gated Recurrent Units (GRUs) 312 implementing Tanh function, and which is bidirectional. As may be appreciated, Tanh is generally used in LSTM and other RNN algorithm such that it can train easily through gradient descent. Further, the output from the block 310 is passed to a fully connected layer 314 that takes the output of convolution/pooling and predicts the best label to describe the received input, which is finally outputted via a block 316.

Herein, the trained function 300 is a modified version of the SELDnet (a recurrent convolution neural network) with changed hidden layers. In particular, in the present implementation of sound processing for anomaly detection and localization, among the several existing sound sources, the trained function 300 identifies and localizes the dominant anomalous sound. The trained function 300, initially trained on anomalous sound, may be trained for other sound sources without the need for a large dataset using transfer learning. Herein, the trained function 300 infers the coordinates of the detected sound source in 3D space in the facility.

Referring back to FIG 1, as illustrated, the detection module 120 also includes a localization unit 128. The localization unit 128 is configured to detect the one or more anomalies in the facility based on the identified one or more anomalous sound signals. In one embodiment, the localization unit 128 is configured to determine the location information of the site of the detected one or more anomalies in the facility based on the filtered one or more ambient sound signals and the associated one or more sites therewith. That is, as discussed, each of the ambient sound signals may be associated with a corresponding site in the facility. Therefore, once the anomalous sound signals have been identified, the corresponding ambient sound signals which may have been isolated therefrom are analyzed. Based on the analysis, the corresponding site(s) to such ambient sound signals may be determined by looking up association between the said ambient sound signals and the corresponding site in the facility; which, in turn, may be used as the location information of the site of the detected one or more anomalies in the facility.

In an alternate embodiment, the localization unit 128 is configured to determine the location information of the site of the detected one or more anomalies in the facility by implementing one or more of time delay estimation technique, beamforming technique and deep-neural networks for processing of the captured sound signals. In one example, the localization unit 128 may implement Time Delay Estimation (TDE) which estimate the time difference of arrival (TDOA) of the signal at the microphone pairs and then calculate the location of the source using TDOA algorithms such as spherical interpolation, hyperbolic intersection etc. These methods are also called TOA methods or interaural time difference (ITD). Different methods based on TDE are cross correlation (CC), Adaptive Eigenvalue Decomposition (AED), Generalized Cross correlation (GCC), LMS and Average square difference function (ASDF). In another example, the localization unit 128 may implement beamforming which involves searching the highest acoustic energy among all incoming waves, with the direction of highest energy provides the direction of the source. In yet another example, the localization unit 128 may implement SELDNet (Sound Event Localization and Detection of Overlapping Sources Using Convolutional Recurrent Neural Networks) which is broadly divided into the sub-tasks of sound event detection and sound-source localization. The algorithms are capable of recognizing and localizing more than two overlapping sound events simultaneously and tracking their activity with respect to time.

Further, as illustrated, the system 100 includes a vision-processing module 130. The vision-processing module 130 includes an object detection and recognition unit 132 which is adapted to receive captured video feed of the facility from the vision-sensing unit 114. The object detection and recognition unit 132 is configured to process the video feed to determine if there is any object in frames of the video feed. This is achieved by using standard 2D/3D object recognition algorithms such as Mobilenet-SSD, YOLOv3, etc. The tasks performed may include: recognize previously unknown objects on-site which may be useful to specific use-case, detect the presence and visually locate humans in the video frame, detect cars and number plates in case of traffic monitoring, and the like.

In one or more embodiments, the vision-processing module 130 may further include a gesture/activity recognition unit 134 which may analyze the detected object in the captured video, and is configured to recognize one or more individuals calling for assistance based on one or more of sound analysis, pose estimation and gesture recognition, at the site of the detected one or more anomalies in the facility. The said techniques for gesture/activity recognition are well known in the art and thus have not been described herein for the brevity of the present disclosure. By implementing the gesture/activity recognition unit 134, the present system 100 is made capable to check if there is any human who may be trapped at the site of the anomaly in the facility, say in case of an explosion at the said site, and thus suitable rescue could be planned.

In some examples, the vision-processing module 130 may further include a V-SLAM (Visual - Simultaneous Localization and Mapping) unit 136 which may help to recognize visual features and objects of previously known location in the facility to determine current location in the environment, as would be implemented by an autonomous vehicle (such as an autonomous vehicle 400, as discussed later in the description. In one example, the V-SLAM unit 136 employs an Intel Realsense T265 APIs or software provided by equivalent hardware for such purpose. The vision-processing module 130 may further include a surveillance unit 138 configured to transmit the audio feed and video feed, as received from the perception module 110, to a communication module (such as a communication module 140, as discussed later in the description). The surveillance unit 138 may further enable an autonomous vehicle to follow a criminal suspect and record the scene, and also to activate such autonomous vehicle to combat security breach.

Further, as illustrated, the system 100 includes a communication module 140. The communication module 140 is responsible for communication information between the RTLS platform 102 associated with the facility, and the various modules in the system 100. As shown, the communication module 140 includes a network unit 142 and an RTLS transponder 144. For the purposes of the present disclosure, the network unit 142 may provide a WIFI based communication network; although other suitable communication network(s) may be implemented without any limitations. The RTLS transponder 144 is adapted to communicate with the RTLS anchor 106 in the RTLS platform 102, to respond to various RTLS related queries from various modules (as received via the network unit 142) in the system 100.

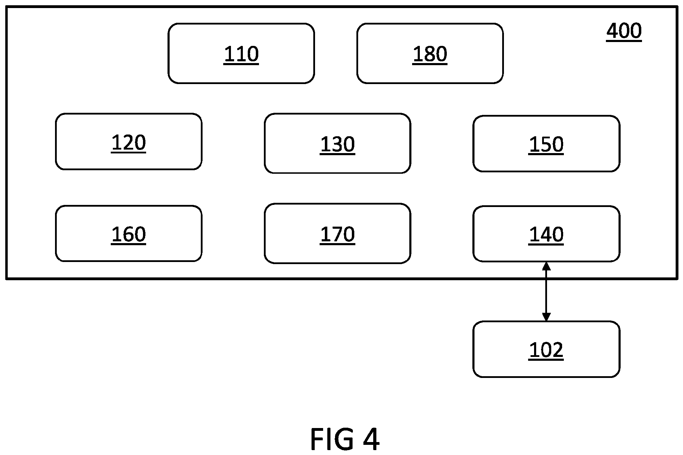

In accordance with embodiments of the present disclosure, the system 100 utilizes an autonomous vehicle (also, hereinafter, sometimes referred to as "robot" or "bot" without any limitations). FIG 4 is a schematic block diagram representation of an autonomous vehicle 400 for anomaly management in a facility, in accordance with an embodiment of the present disclosure. Such autonomous vehicle 400 is stationed in the facility for the said purpose. In an embodiment, the detection module 120 is integrated in the autonomous vehicle 400 (as shown in FIG 4). In a further embodiment, the system 100 is hosted in the autonomous vehicle 400 and all of the modules of the system 100, including the perception module 110, the detection module 120 and the vision-processing module 130, with all respective units therein, as discussed so far, are integrated in the autonomous vehicle 400 (as shown in FIG 4).

Referring to FIG 1 and FIG 4 in combination, as illustrated, the autonomous vehicle 400 includes a navigation module 150 configured to navigate the autonomous vehicle 400 to the site of the detected one or more anomalies in the facility in response to detection of the one or more anomalies therein, based on the determined location information of the site of the detected one or more anomalies in the facility. In some embodiments, the navigation module 150 may be remote to the autonomous vehicle 400 and control its functions therefrom, without departing from the scope and the spirit of the present disclosure. Herein, the navigation module 150 is configured to determine a current location of the autonomous vehicle 400 in the facility using the real-time locating system (RTLS) platform associated with the facility. Further, the navigation module 150 is configured to navigate the autonomous vehicle 400 to the site of the detected one or more anomalies in the facility based on the determined current location of the autonomous vehicle 400 in the facility and the determined location information of the site of the detected one or more anomalies in the facility, by implementing Visual Simultaneous Localization and Mapping (VSLAM) technique, as discussed in the proceeding paragraphs.

In one or more embodiments, the navigation module 150 includes a goal determination unit 152 which receives inputs from the object detection and recognition unit 132 related to position of various objects in a path (to be traversed) of the autonomous vehicle, the gesture/activity recognition unit 134 related to type of gesture/activity detected and the localization unit 128 related to the location information (in the form of coordinates) of the site of the detected one or more anomalies in the facility. Using the received inputs, the goal determination unit 152 sets goal coordinates for the autonomous vehicle 400. It may be appreciated that, in general, the goal coordinates may be proximal to the site of the detected one or more anomalies in the facility. In general, the goal determination unit 152 takes inputs from located sound-source coordinates, location of detected objects/humans (using Yolo-v3/faster RCNN/ Mobilenet-SSD), and recognized gestures/activities (Action detection algorithms - Skeleton-Based Action Classification, Temporal and spatio-Temporal Action Detection, EgoCentric Action Recognition; Pose detection tools - AlphaPose, OpenPose Library, DensePose, MultiPoseNet), if any, and determines the coordinates of the location to which the autonomous vehicle 100 needs to travel, depending on the use-case.

The navigation module 150 further includes a path planning unit 154 configured to define a path to be followed by the autonomous vehicle 400 for reaching the goal coordinates in the facility. The path planning unit 154 uses default path-planner of Robot Operating System (ROS), which is an open source robotics middleware suite to plan the path till the destination set by goal determination unit 152.

The navigation module 150 further includes a tracking unit 156 adapted to receive odometry data from the odometry-sensing unit 118, map information of the facility from the RTLS anchor 106, via the RTLS transponder 144, and frame of reference information in the facility indirectly via the V-SLAM unit 136 to ascertain its pose, as required in order to reach the goal coordinates. In an example implementation, the tracking unit 156 performs sensor fusion of various sensor data elements to obtain the robot pose in its world, which is done by the Realsense T265 or equivalent sensor.

The navigation module 150 further includes an obstacle avoidance unit 158 which receives information about detected objects from the vision-processing module 130 and may adjust the planned path to avoid obstacles. Herein, in an example implementation, the obstacle avoidance unit 158 may either use the custom ROS package developed using D435 depth data or use the dynamic window algorithm (DWA) which uses laser-scan data as used in ROS' default local path planner.

All such information from the various units of the navigation module 150, including the goal determination unit 152, the path planning unit 154, the tracking unit 156 and the obstacle avoidance unit 158, is fed to a command unit 159 of the autonomous vehicle 400.

As illustrated, the autonomous vehicle 400 further includes an actuation module 160. The actuation module 160 may receive command signals from the command unit 159, of the navigation module 150, for controlling the movement of the autonomous vehicle 400. In particular, the actuation module 160 includes a motor driver unit 162 which sends electrical signals to motors 164, in order to control rotational speed for the motors 164, and thereby control speed and direction of the autonomous vehicle 400 for reaching the destination set by goal determination unit 152.

As the autonomous vehicle 400 reaches the destination set by goal determination unit 152, the perception module 110 is enabled to capture information about the detected one or more anomalies in the facility at the site of the facility. Such captured information may include a video feed of the said site, audio feed of sounds at the said site, other information including temperature, humidity, etc. from available sensors in the autonomous vehicle 400, and so on. In some embodiments, the communication module 140 is configured to configured to communicate the captured information to the RTLS platform 102.

For the purposes of the present disclosure, the system 100 may only need to employ one autonomous vehicle 400 for covering the facility to most extent, unless the facility may be very large. All the sensors and controllers (as discussed) may be embedded in the autonomous vehicle 400, making it suitable for both indoor as well as outdoor use. Herein, the autonomous vehicle 400 may either be an unmanned aerial vehicle (UAV), an unmanned ground vehicle (UGV) or an unmanned underwater vehicle (UWV) without any limitations. In some examples, the facility may employ multiple autonomous vehicles 400. This may allow using the microphone-arrays across multiple autonomous vehicles 400, which may result in better accuracy in sound-source-localization (SSL) as compared to using traditional techniques like time-delay-of-arrival (TDOA), since, as known, greater distance between distributed microphones is expected to yield much better accuracy of localization. If the said multiple autonomous vehicles 400 are placed far apart within the facility, their corresponding microphones would be far from each other, and the accuracy of localization would be improved significantly if information gathered is synchronized.

Further, as illustrated in FIG 1, the system includes a map-building module 170. The map-building module 170 includes a mapping unit 172 which is configured to process the captured information about the detected one or more anomalies to generate map information representing the detected one or more anomalies along with at least a partial map of the facility indicating access to the site of the detected one or more anomalies therein. The mapping unit 172 may use information about the facility from a map database 174 for such purpose. In general, the map-building module 170 may be responsible for building the map (2D and 3D), keeping track of object information and robots pose in the map, and so on. In an example implementation, the map-building module 170 employs ROS packages for the said purposes and the entire visualization may take place on Rviz. Herein, the coordinates obtained by the goal determination unit 152 may be fed to the "goal" ROStopic which gets reflected on the map through Rviz.

In preferred embodiments, the communication module 140 is configured to configured to relay the generated map information. That is, the communication module 140 may not directly transmit the captured information by the perception module 110 from the site with the detected one or more anomalies, but may only transmit the generated map information which represent the detected one or more anomalies along with at least a partial map of the facility indicating access to the site of the detected one or more anomalies therein. In the present embodiments, the communication module is configured to relay the generated map information via one or more of: web portal, FTP server, web service, email. Such communication protocols are well known to be employed for transmitting information for wider distribution, like as may be needed to be distributed to local authorities like police station, fire station, etc. in addition to in-house personnel and SAR teams at the facility.

For purposes of the present disclosure, the map information is in the form of overlaid information on a map of the site with the detected one or more anomalies. The map information is generated to provide all important details required for, say, a Search and Rescue (SAR) Team to reach the site with the detected one or more anomalies in the facility. Thus, the map information may provide sufficient details required to mitigate the anomaly while not providing specific details of the facility (like video feed) which may otherwise compromise privacy of the facility, as may not be desired in some situations.

Further, in some embodiments, the system 100 may include a peripheral module 180. The peripheral module 180 may include a security unit 182 configured to activate the autonomous vehicle 400 in case of security breach, as may be determined by the surveillance unit 138. The peripheral module 180 may further include a care unit 184 which may have care packages to be used, for example, by injured personnel in case of an anomaly and which may be transported to the site of anomaly by the autonomous vehicle 400. The peripheral module 180 may further include an on-site communication unit 186 which may include a microphone 187 to record messages from personnel in the facility, such as message for help at the site of anomaly, and a speaker 188 to relay messages from outside, for example from SAR team, to such personnel.

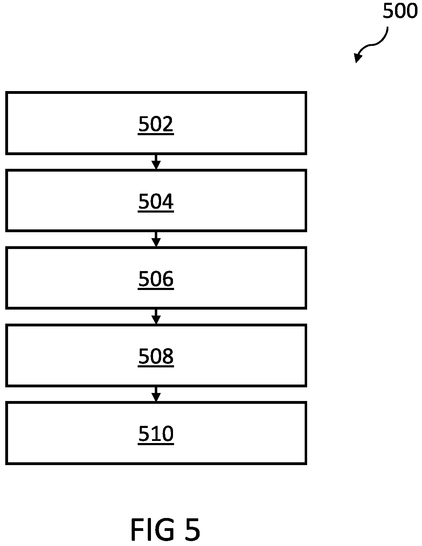

The present disclosure further provides a method for anomaly management in a facility. FIG 5 is a flowchart 500 illustrating steps involved in a method for anomaly management in a facility, in accordance with an embodiment of the present disclosure. At step 502, the method includes monitoring the facility to detect one or more anomalies therein. At step 504, the method includes determining location information of a site of the detected one or more anomalies in the facility. At step 506, the method includes navigating an autonomous vehicle to the site of the detected one or more anomalies in the facility in response to detection of the one or more anomalies therein, based on the determined location information of the site of the detected one or more anomalies in the facility. At step 508, the method includes capturing, by the autonomous vehicle, information about the detected one or more anomalies in the facility at the site of the facility. At step 510, the method includes communicating the captured information about the detected one or more anomalies along with the determined location information of the site of the detected one or more anomalies in the facility.

The present disclosure provides a system 100 which employs the autonomous vehicle 400 for detecting and relaying the position and severity of anomalies in a privacy preserving manner. The present disclosure solves the problem of simultaneous localization and detection of anomalous phenomena by a combination of vision and auditory perception. The proposed system 100 can be extended to various use-cases where there is a need to detect anomalous sounds, for search and rescue operations and to provide alert signals to nearby authorities to combat crime/take security measures. Specifically, the architecture of the proposed system 100 enables to detect anomalous sounds and navigate to the site of anomaly autonomously in a privacy preserving manner without involving human agents in the loop.

As per embodiments of the present disclosure, the robot gets activated after detecting an anomalous sound, and only then navigates through the environment with visual perception. This would be useful for private areas (bathrooms, highly confidential rooms etc.) where continuous monitoring through CCTV cameras is undesirable. The map information containing the map of the disaster-affected area, as formed by the robot would be sent to the rescue teams. The information of useful objects in the scene and/or any information regarding the changed environment after the disaster could aid in the rescue operation. For example, the robot detects an explosion sound in an area of the factory which is now on fire. This robot now navigates through the entire area to understand the scene and builds a map with all relevant information. The explosion may have caused a fire exit to be blocked, or certain useful objects such as fire extinguishers/ropes to be displaced from their original location. The robot may understand this scene through visual cues and include this information on the map which it builds. The map information representing the changed environment is sent to the rescue teams in addition to the direct visual stream (if allowed), as such information might aid in the rescue operation.

Herein, the autonomous vehicle is triggered only when it detects an anomalous sound. The camera on the bot is used to stream videos of the anomaly only after reaching the site of the event. This ensures that privacy is preserved in non-public environments. The present system 100 is cost-effective since all processing is done on an edge device (e.g., Jetson Nano). Integration with the RTLS platform enables the proposed solution to communicate to personnel and equipment to ensure immediate action during industrial fires and explosions.

In particular, the autonomous vehicle is triggered by an anomaly, and begins to navigate in the direction of the anomaly. The communication module on the autonomous vehicle sends a wireless signal/alert with the location of anomaly to the nearest Anchor placed within the factory premises. The RTLS platform can alert personnel, shutdown machines and apply specific poka-yokes in the area where the anomaly is identified. This would ensure that damage is minimal. The communication module may be a transponder placed on the bot. Since currently in the RTLS platform, messages transferred are time-stamped location data; if the anchor is extended to receive video streams, then the visualization tool of RTLS platform can be used to monitor and view anomalies for purposes of the present disclosure. Herein, RTLS platform is further used to align the visual odometry of the autonomous vehicle with the map of the factory.

It may be appreciated that the functionalities of the proposed system 100 could be modified to be used in other use-cases, such as traffic monitoring, security surveillance and safety in factories. In particular, the present system 100 may be implemented for detection of suspicious activity in crowded areas, burglary (security breach), an individual's call for help, potential calamities/disasters (explosion/gunshots etc.),useful objects at the site of calamity in a changed environment, accidents (Collision sounds), emergency vehicles approaching (Sound of sirens), abnormally high honking of cars (decibel level of a specific car horn), etc. The present system 100 may also be implemented for localization of lost individuals in crowds, stranded victims during a calamity, crime victims, culprits of crime, road accident location (Direction of collision sound), vehicles (Direction of siren), car violating noise pollution norms (Localizing car with abnormally high honking patterns). The present system 100 may further be implemented for navigating to location of calamity (explosion/gunshot), location of call for help, site of road accident, tracking and following suspects in crowded areas/crime culprit (capturing facial image if required), vehicles breaking traffic laws (capturing number-plate image if necessary). The present system 100 may further be implemented for capturing the scene of calamity and relaying the information to the control center, sending alert signals to nearby authorities to combat crime/take security measures, messages to nearby traffic signals (over the network) to optimize traffic flow enabling swift passage of emergency vehicles, messages to remote database to keep record of traffic violations

According to various embodiments of the present disclosure, at least a part of devices (e.g., modules or functions thereof) or methods (e.g., operations) according to various embodiments of the present disclosure may be implemented as instructions stored in a computer-readable storage non-transitory medium in the form of a programming module. In the case where the instructions are performed by at least one processor, the at least one processor may perform functions corresponding to the instructions. The computer-readable storage medium may be, for example, a memory. At least a part of the programming module may be implemented (e.g., executed) by the processor. At least a part of the programming module may include, for example, a module, a program, a routine, sets of instructions, or a process for performing at least one function.

## Claims

1. A method for anomaly management in a facility, the method comprising:
monitoring (502) the facility to detect one or more anomalies therein;
determining (504), using a trained function, location information of a site of the detected one or more anomalies in the facility;
navigating (506) an autonomous vehicle (400) to the site of the detected one or more anomalies in the facility in response to detection of the one or more anomalies therein, based on the determined location information of the site of the detected one or more anomalies in the facility;
capturing (508), by the autonomous vehicle (400), information about the detected one or more anomalies in the facility at the site of the facility; and
communicating (510) the captured information about the detected one or more anomalies along with the determined location information of the site of the detected one or more anomalies in the facility,
wherein monitoring the facility to detect the one or more anomalies comprises:
capturing sound signals in the facility;
and the method further comprises:
filtering one or more ambient sound signals from the captured sound signals, using a dataset (122) of the plurality of characteristic ambient sound signals, to provide filtered sound signals, wherein the dataset (122) of the plurality of characteristic ambient sound signals includes multiple sound patterns which represent possible ambient sound patterns in the facility;
identifying, by the trained function, one or more anomalous sound signals from the filtered sound signals; and
detecting the one or more anomalies in the facility based on the identified one or more anomalous sound signals.

2. The method according to claim 1, wherein the dataset of the plurality of characteristic ambient sound signals have each of the plurality of characteristic ambient sound signals associated with one or more sites in the facility, the method further comprising determining the location information of the site of the detected one or more anomalies in the facility based on the filtered one or more ambient sound signals and the associated one or more sites therewith.

3. The method according to claim 1 further comprising determining the location information of the site of the detected one or more anomalies in the facility by implementing one or more of time delay estimation technique, beamforming technique and deep-neural networks for processing of the captured sound signals.

4. The method according to claim 1 further comprising:
training the trained function on a plurality of characteristic anomalous sound signals associated with the facility; and
identifying, by the trained function, the one or more anomalous sound signals based on recognition of one or more captured sound signals substantially matching at least one of the plurality of characteristic anomalous sound signals.

5. The method according to claim 1 further comprising:
training the trained function on a plurality of characteristic ambient sound signals associated with the facility; and
identifying, by the trained function, the one or more anomalous sound signals based on recognition of one or more captured sound signals substantially differing from each of the plurality of characteristic ambient sound signals.

6. The method according to claim 1 further comprising determining a current location of the autonomous vehicle (400) in the facility using a real-time locating system (RTLS) platform (102) associated with the facility.

7. The method according to claim 6 further comprising navigating the autonomous vehicle (400) to the site of the detected one or more anomalies in the facility based on the determined current location of the autonomous vehicle (400) in the facility and the determined location information of the site of the detected one or more anomalies in the facility, by implementing Visual Simultaneous Localization and Mapping (VSLAM) technique.

8. The method according to claim 1 further comprising recognizing one or more individuals calling for assistance based on one or more of sound analysis, pose estimation and gesture recognition, at the site of the detected one or more anomalies in the facility.

9. The method according to claim 1 further comprising:
processing the captured information about the detected one or more anomalies to generate map information representing the detected one or more anomalies along with at least a partial map of the facility indicating access to the site of the detected one or more anomalies therein; and
relaying the generated map information.

10. The method according to claim 9 further comprising relaying the generated map information via one or more of: web portal, FTP server, web service, email.

11. The method according to claim 1 further comprising implementing the autonomous vehicle (400) to monitor the facility.

12. An autonomous vehicle (400) adapted to be stationed in a facility for anomaly management therein, the autonomous vehicle (400) comprising:
a detection module (120) configured to monitor the facility to detect one or more anomalies therein, the detection module (120) further configured to determine location information of a site of the detected one or more anomalies in the facility;
a navigation module (150) configured to navigate the autonomous vehicle (400) to the site of the detected one or more anomalies in the facility in response to detection of the one or more anomalies therein, based on the determined location information of the site of the detected one or more anomalies in the facility;
a perception module (110) configured to capture information about the detected one or more anomalies in the facility at the site of the facility, the perception module (110) including a sound-sensing unit (112) configured to capture sound signals in the facility; and
a communication module (140) configured to communicate the captured information about the detected one or more anomalies along with the determined location information of the site of the detected one or more anomalies in the facility;
wherein the detection module (120) includes a dataset (122) of a plurality of characteristic ambient sound signals, wherein the dataset (122) of the plurality of characteristic ambient sound signals includes multiple sound patterns which represent possible ambient sound patterns in the facility, a filter unit (124) configured to filter one or more ambient sound signals from the captured sound signals, using the dataset (122) of a plurality of characteristic ambient sound signals, to provide filtered sound signals, the detection module (120) further including a classification unit (126) implemented as a trained function and configured to identify one or more anomalous sound signals from the filtered sound signals, wherein detection of the one or more anomalies in the facility is based on the identified one or more anomalous sound signals.

13. The autonomous vehicle (400) according to claim 12, further comprising
a map-building module (170) configured to process the captured information about the detected one or more anomalies to generate map information representing the detected one or more anomalies along with at least a partial map of the facility indicating access to the site of the detected one or more anomalies therein;
wherein the communication module (140) is configured to relay the generated map information,

14. A system (100) for anomaly management in a facility, the system (100) comprising:
one or more processing units (204); and
a memory (206) communicatively coupled to the one or more processing units (204), the memory (206) comprising a plurality of modules configured to perform the method steps as claimed in claims 1 to 11.

15. A computer-program product, having computer-readable instructions stored therein, that when executed by a processing unit (204), cause the processing unit (204) to perform method steps according to claims 1 to 11.

## Patentansprüche

1. Verfahren zur Anomalieverwaltung in einer Einrichtung, wobei das Verfahren umfasst:
Überwachen (502) der Einrichtung, um eine oder mehrere Anomalien darin zu detektieren;
Bestimmen (504), unter Verwendung einer trainierten Funktion, von Standortinformationen eines Ortes der einen oder der mehreren detektierten Anomalien in der Einrichtung;
Navigieren (506) eines autonomen Fahrzeugs (400) zu dem Ort der einen oder der mehreren detektierten Anomalien in der Einrichtung als Reaktion auf die Detektion der einen oder der mehreren Anomalien darin, basierend auf den bestimmten Standortinformationen des Ortes der einen oder der mehreren detektierten Anomalien in der Einrichtung;
Erfassen (508), durch das autonome Fahrzeug (400), von Informationen über die eine oder die mehreren detektierten Anomalien in der Einrichtung am Ort der Einrichtung; und
Kommunizieren (510) der erfassten Informationen über die eine oder die mehreren detektierten Anomalien zusammen mit den bestimmten Standortinformationen des Ortes der einen oder der mehreren detektierten Anomalien in der Einrichtung,
wobei das Überwachen der Einrichtung, um die eine oder die mehreren Anomalien zu detektieren, umfasst:
Erfassen von Tonsignalen in der Einrichtung;
und wobei das Verfahren ferner umfasst:
Filtern eines oder mehrerer Umgebungstonsignale aus den erfassten Tonsignalen unter Verwendung eines Datensatzes (122) der Vielzahl charakteristischer Umgebungstonsignale, um gefilterte Tonsignale bereitzustellen, wobei der Datensatz (122) der Vielzahl charakteristischer Umgebungstonsignale mehrere Klangmuster beinhaltet, die mögliche Umgebungsklangmuster in der Einrichtung repräsentieren;
Identifizieren, durch die trainierte Funktion, eines oder mehrerer anomaler Tonsignale aus den gefilterten Tonsignalen; und
Detektieren der einen oder der mehreren Anomalien in der Einrichtung basierend auf dem einen oder den mehreren identifizierten anomalen Tonsignalen.

2. Verfahren nach Anspruch 1, wobei im Datensatz der Vielzahl charakteristischer Umgebungstonsignale jedes der Vielzahl charakteristischer Umgebungstonsignale jeweils mit einem oder mehreren Orten in der Einrichtung assoziiert ist, wobei das Verfahren ferner das Bestimmen der Standortinformationen des Ortes der einen oder der mehreren detektierten Anomalien in der Einrichtung basierend auf dem einen oder den mehreren gefilterten Umgebungstonsignalen und dem einen oder den mehreren damit assoziierten Orten umfasst.

3. Verfahren nach Anspruch 1, ferner umfassend Bestimmen der Standortinformationen des Ortes der einen oder der mehreren detektierten Anomalien in der Einrichtung durch Implementieren einer oder mehrerer von Zeitverzögerungsschätzungstechnik, Strahlformungstechnik und tiefen neuronalen Netzwerken zur Verarbeitung der erfassten Tonsignale.

4. Verfahren nach Anspruch 1, ferner umfassend:
Trainieren der trainierten Funktion an einer Vielzahl charakteristischer anomaler Tonsignale, die mit der Einrichtung assoziiert sind; und
Identifizieren, durch die trainierte Funktion, des einen oder der mehreren anomalen Tonsignale basierend auf der Erkennung eines oder mehrerer erfasster Tonsignale, die im Wesentlichen mit mindestens einem der Vielzahl charakteristischer anomaler Tonsignale übereinstimmen.

5. Verfahren nach Anspruch 1, ferner umfassend:
Trainieren der trainierten Funktion an einer Vielzahl charakteristischer Umgebungstonsignale, die mit der Einrichtung assoziiert sind; und
Identifizieren, durch die trainierte Funktion, des einen oder der mehreren anomalen Tonsignale basierend auf der Erkennung eines oder mehrerer erfasster Tonsignale, die sich im Wesentlichen von jedem der Vielzahl charakteristischer Umgebungstonsignale unterscheiden.

6. Verfahren nach Anspruch 1, ferner umfassend Bestimmen eines aktuellen Standorts des autonomen Fahrzeugs (400) in der Einrichtung unter Verwendung einer Echtzeit-Lokalisierungssystem-Plattform (RTLS-Plattform) (102), die mit der Einrichtung assoziiert ist.

7. Verfahren nach Anspruch 6, ferner umfassend Navigieren des autonomen Fahrzeugs (400) an den Ort der einen oder der mehreren detektierten Anomalien in der Einrichtung basierend auf dem bestimmten aktuellen Standort des autonomen Fahrzeugs (400) in der Einrichtung und den bestimmten Standortinformationen des Ortes der einen oder der mehreren detektierten Anomalien in der Einrichtung, durch Implementieren einer Technik mit visueller simultaner Positionsbestimmung und Kartierung (VSLAM).

8. Verfahren nach Anspruch 1, ferner umfassend Erkennen eines oder mehrerer Individuen, die um Hilfe rufen, basierend auf einem oder mehreren von Tonanalyse, Stellungsschätzung und Gestenerkennung an dem Ort der einen oder der mehreren detektierten Anomalien in der Einrichtung.

9. Verfahren nach Anspruch 1, ferner umfassend:
Verarbeiten der erfassten Informationen über die eine oder die mehreren detektierten Anomalien, um Karteninformationen zu erzeugen, die die eine oder die mehreren detektierten Anomalien mit zumindest einer Teilkarte der Einrichtung repräsentieren, die einen Zugang zu dem Ort der einen oder der mehreren detektierten Anomalien darin angibt; und
Übermitteln der erzeugten Karteninformationen.

10. Verfahren nach Anspruch 9, ferner umfassend Übermitteln der erzeugten Karteninformationen über eines oder mehrere von Folgendem: Webportal, FTP-Server, Webdienst, E-Mail.

11. Verfahren nach Anspruch 1, ferner umfassend Implementieren des autonomen Fahrzeugs (400) zur Überwachung der Einrichtung.

12. Autonomes Fahrzeug (400), das dazu eingerichtet ist, in einer Einrichtung zur Anomalieverwaltung darin stationiert zu sein, wobei das autonome Fahrzeug (400) umfasst:
ein Detektionsmodul (120), das ausgelegt ist zum Überwachen der Einrichtung, um eine oder mehrere Anomalien darin zu detektieren, wobei das Detektionsmodul (120) ferner ausgelegt ist zum Bestimmen von Standortinformationen eines Ortes der einen oder der mehreren detektierten Anomalien in der Einrichtung;
ein Navigationsmodul (150), das ausgelegt ist zum Navigieren des autonomen Fahrzeugs (400) zu dem Ort der einen oder der mehreren detektierten Anomalien in der Einrichtung als Reaktion auf die Detektion der einen oder der mehreren Anomalien darin, basierend auf den bestimmten Standortinformationen des Ortes der einen oder der mehreren detektierten Anomalien in der Einrichtung;
ein Wahrnehmungsmodul (110), das ausgelegt ist zum Erfassen von Informationen über die eine oder die mehreren detektierten Anomalien in der Einrichtung am Ort der Einrichtung, wobei das Wahrnehmungsmodul (110) eine Tonerfassungseinheit (112) beinhaltet, die ausgelegt ist zum Erfassen von Tonsignalen in der Einrichtung; und
ein Kommunikationsmodul (140), das ausgelegt ist zum Kommunizieren der erfassten Informationen über die eine oder die mehreren detektierten Anomalien zusammen mit den bestimmten Standortinformationen des Ortes der einen oder der mehreren detektierten Anomalien in der Einrichtung;
wobei das Detektionsmodul (120) beinhaltet: einen Datensatz (122) einer Vielzahl charakteristischer Umgebungstonsignale, wobei der Datensatz (122) der Vielzahl charakteristischer Umgebungstonsignale mehrere Klangmuster beinhaltet, die mögliche Umgebungsklangmuster in der Einrichtung repräsentieren, eine Filtereinheit (124), die ausgelegt ist zum Filtern eines oder mehrerer Umgebungstonsignale aus den erfassten Tonsignalen unter Verwendung des Datensatzes (122) einer Vielzahl charakteristische Umgebungstonsignale, um gefilterte Tonsignale bereitzustellen, wobei das Detektionsmodul (120) ferner eine Klassifikationseinheit (126) beinhaltet, die als eine trainierte Funktion implementiert wird und ausgelegt ist zum Identifizieren eines oder mehrerer anomaler Tonsignale aus den gefilterten Tonsignalen, wobei die Detektion der einen oder der mehreren Anomalien in der Einrichtung auf dem einen oder der mehreren identifizierten anomalen Tonsignalen basiert.

13. Autonomes Fahrzeug (400) nach Anspruch 12, ferner umfassend
ein Kartenerstellungsmodul (170), das ausgelegt ist zum Verarbeiten der erfassten Informationen über die eine oder die mehreren detektierten Anomalien, um Karteninformationen zu erzeugen, die die eine oder die mehreren detektierten Anomalien mit zumindest einer Teilkarte der Einrichtung repräsentieren, die einen Zugang zu dem Ort der einen oder der mehreren detektierten Anomalien darin angibt;
wobei das Kommunikationsmodul (140) ausgelegt ist zum Übermitteln der erzeugten Karteninformationen.

14. System (100) zur Anomalieverwaltung in einer Einrichtung, wobei das System (100) umfasst:
eine oder mehrere Verarbeitungseinheiten (204); und
einen Speicher (206), der kommunikativ mit der einen oder den mehreren Verarbeitungseinheiten (204) gekoppelt ist, wobei der Speicher (206) eine Vielzahl von Modulen umfasst, die zum Durchführen der Verfahrensschritte nach einem der Ansprüche 1 bis 11 ausgelegt sind.

15. Computerprogrammprodukt mit darin gespeicherten computerlesbaren Anweisungen, die bei Ausführung durch eine Verarbeitungseinheit (204) die Verarbeitungseinheit (204) zum Durchführen von Verfahrensschritten nach einem der Ansprüche 1 bis 11 veranlassen.

## Revendications

1. Procédé de gestion d'anomalies dans une installation, le procédé comprenant :
la surveillance (502) de l'installation dans le but de détecter une ou plusieurs anomalies dans celle-ci ;
la détermination (504), à l'aide d'une fonction entraînée, d'informations de localisation d'un site des une ou plusieurs anomalies détectées dans l'installation ;
la navigation (506) d'un véhicule autonome (400) jusqu'au site des une ou plusieurs anomalies détectées dans l'installation en réponse à la détection des une ou plusieurs anomalies dans celle-ci, sur la base des informations de localisation déterminées du site des une ou plusieurs anomalies détectées dans l'installation ;
la capture (508), par le véhicule autonome (400), d'informations concernant les une ou plusieurs anomalies détectées dans l'installation sur le site de l'installation ; et
la communication (510) des informations capturées concernant les une ou plusieurs anomalies détectées conjointement avec les informations de localisation déterminées du site des une ou plusieurs anomalies détectées dans l'installation,
la surveillance de l'installation dans le but de détecter les une ou plusieurs anomalies comprenant :
la capture de signaux sonores dans l'installation ;
et le procédé comprenant en outre :
le filtrage d'un ou de plusieurs signaux sonores ambiants à partir des signaux sonores capturés, à l'aide d'un ensemble de données (122) de la pluralité de signaux sonores ambiants caractéristiques, dans le but de fournir des signaux sonores filtrés, l'ensemble de données (122) de la pluralité de signaux sonores ambiants caractéristiques comportant de multiples motifs sonores qui représentent des motifs sonores ambiants possibles dans l'installation ;
l'identification, par la fonction entraînée, d'un ou de plusieurs signaux sonores anormaux à partir des signaux sonores filtrés ; et
la détection des une ou plusieurs anomalies dans l'installation sur la base des un ou plusieurs signaux sonores anormaux identifiés.

2. Procédé selon la revendication 1, dans lequel l'ensemble de données de la pluralité de signaux sonores ambiants caractéristiques associe à chacun de la pluralité de signaux sonores ambiants caractéristiques un ou plusieurs sites dans l'installation, le procédé comprenant en outre la détermination des informations de localisation du site des une ou plusieurs anomalies détectées dans l'installation sur la base des un ou plusieurs signaux sonores ambiants filtrés et des un ou plusieurs sites qui leur sont associés.

3. Procédé selon la revendication 1, comprenant en outre la détermination des informations de localisation du site des une ou plusieurs anomalies détectées dans l'installation par mise en œuvre d'une technique d'estimation de temps de retard et/ou d'une technique de formation de faisceau et/ou de réseaux neuronaux profonds pour le traitement des signaux sonores capturés.

4. Procédé selon la revendication 1, comprenant en outre :
l'entraînement de la fonction entraînée sur une pluralité de signaux sonores anormaux caractéristiques associés à l'installation ; et
l'identification, par la fonction entraînée, des un ou plusieurs signaux sonores anormaux sur la base de la reconnaissance d'un ou de plusieurs signaux sonores capturés qui correspondent sensiblement à au moins un de la pluralité de signaux sonores anormaux caractéristiques.

5. Procédé selon la revendication 1, comprenant en outre :
l'entraînement de la fonction entraînée sur une pluralité de signaux sonores ambiants caractéristiques associés à l'installation ; et
l'identification, par la fonction entraînée, des un ou plusieurs signaux sonores anormaux sur la base de la reconnaissance d'un ou de plusieurs signaux sonores capturés qui diffèrent sensiblement de chacun de la pluralité de signaux sonores ambiants caractéristiques.

6. Procédé selon la revendication 1, comprenant en outre la détermination d'une localisation actuelle du véhicule autonome (400) dans l'installation à l'aide d'une plateforme (102) de système de localisation en temps réel (RTLS) associée à l'installation.

7. Procédé selon la revendication 6, comprenant en outre la navigation du véhicule autonome (400) jusqu'au site des une ou plusieurs anomalies détectées dans l'installation sur la base de la localisation actuelle déterminée du véhicule autonome (400) dans l'installation et des informations de localisation déterminées du site des une ou plusieurs anomalies détectées dans l'installation, par mise en œuvre d'une technique de localisation et de cartographie visuelles simultanées (VSLAM).

8. Procédé selon la revendication 1, comprenant en outre la reconnaissance d'une ou de plusieurs personnes appelant à l'aide sur la base d'une analyse des sons et/ou d'une estimation de pose et/ou d'une reconnaissance gestuelle, sur le site des une ou plusieurs anomalies détectées dans l'installation.

9. Procédé selon la revendication 1, comprenant en outre :
le traitement des informations capturées concernant les une ou plusieurs anomalies détectées dans le but de générer des informations cartographiques représentant les une ou plusieurs anomalies détectées conjointement avec au moins une carte partielle de l'installation indiquant l'accès au site des une ou plusieurs anomalies détectées dans celle-ci ; et
la transmission des informations cartographiques générées.

10. Procédé selon la revendication 9, comprenant en outre la transmission des informations cartographiques générées par le biais d'un portail Web et/ou d'un serveur FTP et/ou d'un service Web et/ou d'un email.

11. Procédé selon la revendication 1, comprenant en outre la mise en œuvre du véhicule autonome (400) dans le but de surveiller l'installation.

12. Véhicule autonome (400) adapté à être basé dans une installation pour la gestion d'anomalies dans celle-ci, le véhicule autonome (400) comprenant :
un module de détection (120) configuré pour surveiller l'installation dans le but de détecter une ou plusieurs anomalies dans celle-ci, le module de détection (120) étant configuré en outre pour déterminer des informations de localisation d'un site des une ou plusieurs anomalies détectées dans l'installation ;
un module de navigation (150) configuré pour faire naviguer le véhicule autonome (400) jusqu'au site des une ou plusieurs anomalies détectées dans l'installation en réponse à la détection des une ou plusieurs anomalies dans celle-ci, sur la base des informations de localisation déterminées du site des une ou plusieurs anomalies détectées dans l'installation ;
un module de perception (110) configuré pour capturer des informations concernant les une ou plusieurs anomalies détectées dans l'installation sur le site de l'installation, le module de perception (110) comportant une unité de détection des sons (112) configurée pour capturer des signaux sonores dans l'installation ; et
un module de communication (140) configuré pour communiquer les informations capturées concernant les une ou plusieurs anomalies détectées conjointement avec les informations de localisation déterminées du site des une ou plusieurs anomalies détectées dans l'installation ;
le module de détection (120) comportant un ensemble de données (122) d'une pluralité de signaux sonores ambiants caractéristiques, l'ensemble de données (122) de la pluralité de signaux sonores ambiants caractéristiques comportant de multiples motifs sonores qui représentent des motifs sonores ambiants possibles dans l'installation, une unité de filtrage (124) configurée pour filtrer un ou plusieurs signaux sonores ambiants à partir des signaux sonores capturés, à l'aide de l'ensemble de données (122) d'une pluralité de signaux sonores ambiants caractéristiques, dans le but de fournir des signaux sonores filtrés, le module de détection (120) comportant en outre une unité de classification (126) mise en œuvre sous forme d'une fonction entraînée et configurée pour identifier un ou plusieurs signaux sonores anormaux à partir des signaux sonores filtrés, la détection des une ou plusieurs anomalies dans l'installation étant basée sur les un ou plusieurs signaux sonores anormaux identifiés.

13. Véhicule autonome (400) selon la revendication 12, comprenant en outre
un module d'élaboration de carte (170) configuré pour traiter les informations capturées concernant les une ou plusieurs anomalies détectées dans le but de générer des informations cartographiques représentant les une ou plusieurs anomalies détectées conjointement avec au moins une carte partielle de l'installation indiquant l'accès au site des une ou plusieurs anomalies détectées dans celle-ci ;
le module de communication (140) étant configuré pour transmettre les informations cartographiques générées.

14. Système (100) de gestion d'anomalies dans une installation, le système (100) comprenant :
une ou plusieurs unités de traitement (204) ; et
une mémoire (206) couplée en communication aux une ou plusieurs unités de traitement (204), la mémoire (206) comprenant une pluralité de modules configurés pour réaliser les étapes du procédé selon les revendications 1 à 11.

15. Produit-programme d'ordinateur, dans lequel sont stockées des instructions lisibles par ordinateur qui, lorsqu'elles sont exécutées par une unité de traitement (204), amènent l'unité de traitement (204) à réaliser les étapes du procédé selon les revendications 1 à 11.
